# EUROPEAN PATENT APPLICATION

(11) **EP 4 422 098 A1**
(43) Date of publication of application: **28.08.2024**
(21) Application number: 22891987.4
(22) Date of filing: 08.11.2022
(51) Int. Cl.: H04L 1/00

(54) **CHANNEL STATE INFORMATION FEEDBACK METHOD AND APPARATUS, COMMUNICATION DEVICE, AND STORAGE MEDIUM**

(30) Priority: 10.11.2021 CN 202111326587
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: ZHANG, Jiazhen, Beijing 100053 (CN); ZUO, Jun, Beijing 100053 (CN); CAO, Yuhua, Beijing 100053 (CN)
(74) Representative: J A Kemp LLP
(86) International application number: PCT/CN2022/130698
(87) International publication number: WO 2023/083193

(57) **Abstract**

Disclosed in embodiments of the present disclosure are a channel state information (CSI) feedback method and apparatus, a communication device, and a storage medium. The method comprises: a terminal device sends first information to a network device, the first information at least comprising: CSI feedback method indication information, or error information of different CSI feedback methods and the numbers of bits required for CSI feedback, or the number of bits required for CSI feedback corresponding to a CSI feedback method that satisfies the requirement.

## Description

### CROSS-REFERENCE TO RELATED APPLICATION

This application is filed based on and claims priority to Chinese patent application No. 202111326587.1, filed on November 10, 2021. The entire content of the Chinese patent application is hereby incorporated into this application by reference.

### TECHNICAL FIELD

The present disclosure relates to the technical field of communication, in particular to a method and a device for channel state information (CSI) feedback, a communication device and a storage medium.

### BACKGROUND

Type I (TypeI) and Type II (TypeII) codebooks are used by a user equipment (UE) for precoding matrix indicator (PMI) feedback. Among them, TypeI is a conventional precision codebook, and TypeII is a high-precision codebook. TypeI codebook is a transverse mode codebook, which aims to reduce the complexity of codebook search performed by the UE. TypeII codebook decomposes the spatial channel information into a set of basis vectors, and the UE reports main spatial components and weighting coefficients. Considering the feedback overhead, TypeI and TypeII codebook feedback mechanisms do not directly compress channel information, resulting in that the base station is unable to obtain full channel information.

In order to feed back the full channel CSI information to the base station more completely, the CSI compression feedback based on a neural network is proposed at present. The terminal transmits compressed bits to the base station, and the base station restores the compressed bits into full channel CSI information or an eigenvector of the full channel CSI information through the neural network.

At present, there is no effective solution for how to trigger different CSI feedbacks, especially the CSI feedbacks based on neural networks.

### SUMMARY

The embodiments of the present disclosure provide a method and a device for channel state information feedback, a communication device, and a storage medium.

The technical solution of the embodiment of the present disclosure is implemented as follows.

A first aspect of the embodiments of the present disclosure provides a method for channel state information (CSI) feedback, and the method includes the following operations.

A terminal device transmits first information to a network device. The first information at least includes: indication information of a method for CSI feedback, or a number of bits required for CSI feedback and error information of different methods for CSI feedback, or a number of bits required for CSI feedback corresponding to a method for CSI feedback that satisfies a requirement.

In some optional embodiments of the disclosure, the method for CSI feedback includes at least one of: a codebook-based method for CSI feedback, a neural-network-based-method for full channel CSI compression feedback, or a neural-network-based-method for full-channel CSI eigenvector compression feedback.

In some optional embodiments of the disclosure, in case that the indication information of the method for CSI feedback indicates the neural-network-based method for full channel CSI compression feedback, or the neural-network-based method for full-channel CSI eigenvector compression feedback, the first information further includes the number of bits required for the CSI feedback and parameters of a neural network.

In some optional embodiments of the disclosure, the method for CSI feedback that satisfies the requirement includes a method for CSI feedback, error information of which is less than a first preset threshold.

In some optional embodiments of the present disclosure, in case that the first information at least includes the number of bits required for CSI feedback and error information of the different methods for CSI feedback, or the number of bits required for CSI feedback corresponding to the method for CSI feedback that satisfies the requirement, the method further includes the operation as follows.

The terminal device receives second information transmitted by the network device. The second information includes indication information of the method for CSI feedback.

In some optional embodiments of the present disclosure, in case that the indication information of the method for CSI feedback indicates the neural-network-based-method for full channel CSI compression feedback, or the neural-network-based-method for full-channel CSI eigenvector compression feedback, the method further includes the operation as follows.

The terminal device transmits third information to the network device. The third information includes parameters of a neural network corresponding to the method for CSI feedback.

In some optional embodiments of the present disclosure, the method further includes an operation that the terminal device trains and updates the parameters of the neural network when a first preset condition is satisfied.

In some optional embodiments of the present disclosure, the first preset condition is satisfied when error information of the method for CSI feedback related to the neural network exceeds a second preset threshold; or when first indication information of the network device is received by the terminal device, where the first indication information is used to inform the terminal device to return back to the codebook-based method for CSI feedback.

In some optional embodiments of the present disclosure, the method further includes an operation as follows. The terminal device transmits fourth information to the network device. The fourth information includes: the updated parameters of the neural network and an updated number of the bits required for CSI feedback of the method for CSI feedback related to the neural network.

In some optional embodiments of the present disclosure, in case that the first preset condition is satisfied when error information of the method for CSI feedback related to the neural network exceeds the second preset threshold, the method further includes an operation as follows.

The terminal device transmits second indication information to the network device. The second indication information is used to inform the network device to return back to the codebook-based method for CSI feedback.

A second aspect of the embodiments of the present disclosure further provides a method for CSI feedback, and the method includes an operation as follows.

A network device receives first information transmitted by a terminal device. The first information at least includes: indication information of a method for CSI feedback, or a number of bits required for CSI feedback and error information of different methods for CSI feedback, or a number of bits required for CSI feedback corresponding to a method for CSI feedback that satisfies a requirement.

In some optional embodiments of the disclosure, the method for CSI feedback includes at least one of: a codebook-based method for CSI feedback, a neural-network-based-method for full channel CSI compression feedback, or a neural-network-based-method for full-channel CSI eigenvector compression feedback.

In some optional embodiments of the disclosure, the method for CSI feedback that satisfies the requirement includes a method for CSI feedback, error information of which is less than a first preset threshold.

In some optional embodiments of the disclosure, in case that the first information at least includes the number of bits required for CSI feedback and error information of the different methods for CSI feedback, or the number of bits required for CSI feedback corresponding to the method for CSI feedback that satisfies the requirement, the method further includes the operation as follows.

The network device transmits second information to the terminal device. The second information includes indication information of the method for CSI feedback.

In some optional embodiments of the disclosure, in case that the indication information of the method for CSI feedback indicates the neural-network-based-method for full channel CSI compression feedback, or a neural-network-based-method for full-channel CSI eigenvector compression feedback, the method further includes the operation as follows.

The network device receives third information transmitted by the terminal device. The third information includes parameters of a neural network corresponding to the method for CSI feedback.

In some optional embodiments of the disclosure, the method further includes an operation as follows. The network device transmits first indication information to the terminal device when the second preset condition is not satisfied. The first indication information is used to inform the terminal device to return back to the codebook-based method for CSI feedback.

In some optional embodiments of the disclosure, the method further includes an operation that the network device receives second indication information transmitted by the terminal device. The second indication information is used to inform the network device to return back to the codebook-based method for CSI feedback.

In some optional embodiments of the disclosure, the method further includes an operation that the network device receives fourth information transmitted by the terminal device. The fourth information includes: updated parameters of the neural network and an updated number of the bits required for CSI feedback of the method for CSI feedback related to the neural network.

A third aspect of the embodiments of the present disclosure further provides a device for CSI feedback. The device includes a first communication unit configured to transmit first information to a network device. The first information at least includes: indication information of a method for CSI feedback, or a number of bits required for CSI feedback and error information of different methods for CSI feedback, or a number of bits required for CSI feedback corresponding to a method for CSI feedback that satisfies a requirement.

A fourth aspect of the embodiments of the disclosure further provides a device for CSI feedback. The device includes a second communication unit configured to receive first information transmitted by a terminal device. The first information at least includes: indication information of a method for CSI feedback, or a number of bits required for CSI feedback and error information of different methods for CSI feedback, or a number of bits required for CSI feedback corresponding to a method for CSI feedback that satisfies a requirement.

A fifth aspect of the embodiments of the disclosure further provides a computer-readable storage medium, on which a computer program is stored. The computer program is executed by a processor to implement the operations of the method of the first or second aspect of the embodiment of the present disclosure.

A sixth aspect of the embodiments of the disclosure further provides a communication device including a memory, a processor, and a computer program that is stored on the memory and run on the processor. The program, when executed by the processor, causes the processor to implement the operations of the method of the first or second aspect of the embodiment of the present disclosure.

The embodiments of the disclosure provide methods and devices for channel state information feedback, a communication device and a storage medium. The terminal device transmits first information to a network device, and the first information at least includes indication information of the method for CSI feedback, or the number of bits required for CSI feedback and error information of the different methods for CSI feedback, or the number of bits required for the CSI feedback corresponding to the method for CSI feedback that satisfies a requirement. With the technical solution of the embodiment of the present disclosure, the method for CSI feedback is indicated to the network device by the terminal device, to determine which type of CSI feedback is triggered by the terminal device. Alternatively, the error information and the number of bits required for CSI feedback of different methods for CSI feedback, or the number of bits required for CSI feedback corresponding to the method for CSI feedback that satisfies the requirement is transmitted to the network device by the terminal device, so that the network device selects the method for CSI feedback and the network device determines to use which CSI feedback. Therefore, a method for CSI feedback is triggered for CSI feedback under the condition of multiple methods for CSI feedback. In addition, the network device selects the method for CSI feedback according to the error information and the number of bits required for CSI feedback of different methods for CSI feedback, or the number of bits required for CSI feedback corresponding to the method for CSI feedback that satisfies the requirement. This selection made based on the error information and the feedback overhead is beneficial for the network device to perform uplink channel resource scheduling.

### BRIEF DESCRIPTION OF THE DRAWINGS

FIG. 1 is a first flow diagram of a method for channel state information feedback according to an embodiment of the present disclosure.
FIG. 2 is a second flow diagram of a method for channel state information feedback according to an embodiment of the present disclosure.
FIG. 3 is a third flow diagram of a method for channel state information feedback according to an embodiment of the present disclosure.
FIG. 4 is a first interactive flow diagram of a method for channel state information feedback according to an embodiment of the present disclosure.
FIG. 5 is a second interactive flow diagram of a method for channel state information feedback according to an embodiment of the present disclosure.
FIG. 6 is a third interactive flow diagram of a method for channel state information feedback according to an embodiment of the present disclosure.
FIG. 7 is a first schematic diagram of a composition structure of a device for channel state information feedback according to an embodiment of the present disclosure.
FIG. 8 is a second schematic diagram of a composition structure of a device for channel state information feedback according to an embodiment of the present disclosure.
FIG. 9 is a schematic diagram of a hardware composition structure of a communication device according to an embodiment of the present disclosure.

### DETAILED DESCRIPTION

The present disclosure is described in further detail below with reference to the accompanying drawings and specific embodiments.

The technical solution of the embodiments of the present disclosure can be applied to various communication systems, for example a global system of mobile communication (GSM) system, a long term evolution (LTE) system, a 5G system, and the like. Alternatively, the 5G system or 5G network may also be referred to as a new radio (NR) system or NR network.

Exemplary, a communication system applied by embodiments of the present disclosure may include a network device and a terminal device (also referred to as a terminal, a communication terminal and the like). The network device may be a device communicating with the terminal device. The network device can provide communication coverage within a certain area, and can communicate with terminals located in the area. Alternatively, the network device may be a base station in various communication systems, such as an Evolutional Node B (eNB) in an LTE system, or a base station (gNB) in a 5G system or an NR system.

It should be understood that a device having a communication function in a network/system in an embodiment of the disclosure may be referred to as a communication device. The communication device may include a network device and a terminal having a communication function, and the network device and the terminal device may be a device described above, which is not be repeated here. The communication device may also include other devices in the communication system such as other network entities such as network controllers and mobile management entities which are not limited in embodiments of the present disclosure.

It should be understood that the terms "system" and "network" are often used interchangeably in this specification. The term "and/or" used herein merely indicates an association relationship that describes associated objects, indicating three relationships. For example, A and/or B may indicate three cases where A exists alone, both A and B exist, and B exists alone. In addition, the character "/" used herein generally indicates a "or" relationship between related objects.

The terms "first", "second" and the like in the description and the claims of the disclosure are used to distinguish similar objects and are not necessarily used to describe a particular order or sequence. It should be understood that the data used herein are interchangeable where appropriate so that the embodiments of the present disclosure described herein can be implemented for example in an order other than those illustrated or described herein. Further, the terms "include" and "has", and any variations thereof, are intended to cover non-exclusive inclusions. For example, a process, method, system, product or device including a series of steps or units does not necessarily include those steps or units that are clearly listed, but may include other steps or units that are not clearly listed or are inherent to such processes, methods, products or devices.

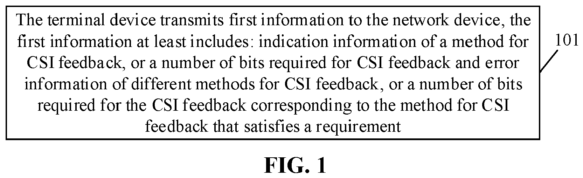

The embodiments of the disclosure provide a method for channel state information feedback. FIG. 1 is a first flow diagram of the method for channel state information feedback according to an embodiment of the present disclosure. As shown in FIG. 1, the method includes operations 101.

At 101, the terminal device transmits first information to the network device. The first information at least includes indication information of the method for CSI feedback, or error information and the number of bits required for CSI feedback of different methods for CSI feedback, or the number of bits required for CSI feedback corresponding to the method for CSI feedback that satisfies a requirement.

In this embodiment, the method for CSI feedback includes at least one of a codebook-based method for CSI feedback, a neural-network-based-method for full channel CSI compression feedback, or a neural-network-based-method for full-channel CSI eigenvector compression feedback.

The codebook-based method for CSI feedback may be, for example, a method for a TypeI codebook or a TypeII codebook feedback. The neural-network-based-method for full channel CSI compression feedback may perform bit compression on the full-channel CSI information based on the neural network. A receiver restores the compressed full-channel CSI information to full-channel CSI information. The neural-network-based-method for full-channel CSI eigenvector compression feedback can perform bit compression of the full-channel CSI information based on the neural network, and the receiver restores the compressed full-channel CSI information to the eigenvector of the full-channel CSI information.

In this embodiment, the CSI feedback can be triggered in at least the following three ways. In a first way, the terminal device determines the method for CSI feedback and indicates the method for CSI feedback to the network device. In a second way, the terminal device transmits error information and the number of bits required for CSI feedback of each method for CSI feedback to the network device, and the network device selects a method for CSI feedback. In a third way, the terminal device first determines the method for CSI feedback that satisfies the requirement, and then transmits the number of bits required for CSI feedback corresponding to the method for CSI feedback that satisfies the requirement to the network device, that is, the terminal device firstly determines a part of the methods for CSI feedback that satisfies the requirement, and then the network device selects the method for CSI feedback.

With the technical solution of the embodiment of the present disclosure, the method for CSI feedback is indicated to the network device by the terminal device, to determine which type of CSI feedback is triggered by the terminal device. Alternatively, the error information and the number of bits required for CSI feedback of different methods for CSI feedback, or the number of bits required for CSI feedback corresponding to the method for CSI feedback that satisfies the requirement is transmitted to the network device by the terminal device, so that the network device selects the method for CSI feedback and the network device determines to use which CSI feedback. Therefore, a method for CSI feedback is triggered for CSI feedback under the condition of multiple methods for CSI feedback. In addition, the network device selects a method for CSI feedback according to the error information and the number of bits required for CSI feedback of different methods for CSI feedback, or the number of bits required for CSI feedback corresponding to the method for CSI feedback that satisfies the requirement. This selection made based on the error information and the feedback overhead is beneficial for the network device to perform uplink channel resource scheduling.

In the first mode described above, the terminal device compares error information of different methods for CSI feedback and/or the number of bits required for CSI feedback of different methods for CSI feedback, and determines the method for CSI feedback based on a comparison result. Alternatively, the terminal device compares error information of different methods for CSI feedback, and selects a method for CSI feedback having error information indicating that an error is minimum, as the method for CSI feedback. Alternatively, the terminal device compares error information of different methods for CSI feedback, determines at least one method for CSI feedback, error information is less than a preset threshold, and selects, among the at least one method for CSI feedback, the method for CSI feedback in which the minimum number of bits is required for CSI feedback as the method for CSI feedback. The error information refers to an error between CSI restored by the network device and CSI transmitted by the terminal device. For example, the error may be a normalized mean squared error (NMSE). The calculation method of the error is not limited in this embodiment. For example, the terminal device may select a method for CSI feedback having the minimum error from the methods for CSI feedback as the method for CSI feedback. For another example, the terminal device may select, among the methods for CSI feedback, a method for CSI feedback having an error smaller than a preset threshold and the minimum number of bits is required for CSI feedback, as the method for CSI feedback.

In the first manner described above, optionally, in case where the indication information of the method for CSI feedback indicates a neural-network-based-method for full channel CSI compression feedback or a neural-network-based-method for full-channel CSI eigenvector compression feedback, the first information further includes a number of bits required for CSI feedback and parameters of a neural network. In this way, the network device can schedule uplink channel resources according to the number of bits required for the CSI feedback, and set parameters of the neural network at a network side according to the parameters of the neural network.

In the second manner described above, the terminal device transmits the error information and the number of bits required for CSI feedback of each method for CSI feedback to the network device, and the network device selects the method for CSI feedback. Alternatively, the network device may select a method for CSI feedback based on error information and/or the number of bits required for CSI feedback of each method for CSI feedback.

In the third manner, the terminal device firstly determines the method for CSI feedback that satisfies the requirement, and then transmits the number of bits required for CSI feedback corresponding to the method for CSI feedback that satisfies the requirement to the network device, and the network device selects the method for CSI feedback. Alternatively, the method for CSI feedback that satisfies the requirement includes: a method for CSI feedback error information of which is less than a first preset threshold. The error information refers to an error between CSI restored by the network device and CSI transmitted by the terminal device. For example, the error may be NMSE. Of course, the calculation method of the error is not limited in this embodiment.

Based on this, in the second manner and the third manner, in case that the first information at least includes error information and the number of bits required for CSI feedback of different methods for CSI feedback, or the number of bits required for CSI feedback corresponding to the method for CSI feedback that satisfies the requirement, the method further includes: receiving, by the terminal device, second information transmitted by the network device. The second information includes indication information of the method for CSI feedback.

In some optional embodiments of the present disclosure, in case that the indication information of the method for CSI feedback indicates the compression feedback method based on the neural-network-based-method for full channel CSI compression feedback, or a neural-network-based-method for full-channel CSI eigenvector compression feedback, the method further includes: transmitting, by the terminal device, third information to the network device. The third information includes parameters of a neural network corresponding to the method for CSI feedback determined by the network device.

In this embodiment, in case that the method for CSI feedback determined by the network device is a neural-network-based-method for full channel CSI compression feedback, or a neural-network-based-method for full-channel CSI eigenvector compression feedback, the terminal device also transmits the parameters of the neural network corresponding to the determined method for CSI feedback to the network device, and the network device can set parameters of a neural network at the network side according to the parameters of the neural network.

In some optional embodiments, the method further includes receiving, by the terminal device, configuration information transmitted by the network device, and performing, by the terminal device, CSI feedback based on the configuration information.

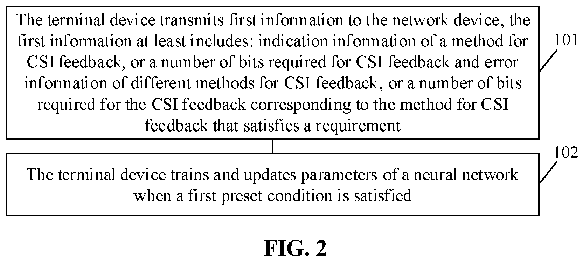

In some optional embodiments of the disclosure, as shown in FIG. 2, the method further includes operation 102 that the terminal device trains and updates parameters of a neural network when a first preset condition is satisfied.

In the embodiment, when the method for CSI feedback related to the neural network is used for performing CSI feedback for a period of time, a channel environment may change greatly. Therefore, it is necessary to update the parameters of the neural network.

In some optional embodiments, the first preset condition is satisfied when error information of the method for CSI feedback related to the neural network exceeds a second preset threshold; or when the terminal device receives the first indication information of the network device, and the first indication information is used to inform the terminal device to return back to a codebook-based CSI feedback method.

In this embodiment, the parameters of the neural network are updated in at least two manners as follows. In a first manner: the terminal device triggers the neural network to update the parameters. In a second manner, the network device triggers the neural network to update the parameters. Specifically, when the network device detects that an update condition is satisfied, the network device transmits first indication information to the terminal device. On the one hand, the terminal device returns back to the codebook-based method for CSI feedback according to the first indication information; on the other hand, the terminal device trains and updates the parameters of the neural network according to the first indication information.

In the first parameter updating manner, when the terminal device detects that error information of the method for CSI feedback related to the neural network indicates the error exceeds the second preset threshold, the terminal device determines that the first preset condition is satisfied, and then trains and updates the parameters of the neural network. For example, the terminal device may store the parameters of the neural network on the terminal side and the network side, simulate a CSI feedback process by using sample CSI, and calculate error information (e.g. NMSE) between the sample CSI transmitted by the terminal device and CSI restored on the network side. If the error information exceeds the second preset threshold, the terminal device determines that the first preset condition is satisfied and the parameters of the neural network need to be updated.

In some optional embodiments, in case that the first preset condition is satisfied when the error information of the method for CSI feedback corresponding to the neural network exceeds the second preset threshold, the method further includes: transmitting, by the terminal device, second indication information to the network device. The second indication information is used to inform the network device to return back to the codebook-based method for CSI feedback.

In this embodiment, that is, when the first parameter updating mode is used, the terminal device transmits second indication information to the network device, and the second indication information is used to inform the network device to return back to the codebook-based method for CSI feedback. In this way, the terminal device and the network device can adopt the codebook-based method for CSI feedback during a training process of the neural network. For example, the terminal device may transmit the second indication information to the network device by signaling.

In the second parameter updating mode, the network device transmits first indication information to the terminal device when the second preset condition is not satisfied, and the first indication information is used to inform the terminal device to return back to the codebook-based method for CSI feedback, that is, the first indication information is used to trigger the terminal device to update the parameters of the neural network. For example, the network device may determine whether the second preset condition is satisfied based on hybrid automatic repeat request (HARQ) feedback information and/or detected state information of a channel between the network device and the terminal device. For example, if the number of negative responses (NACK) received by the network device reaches a threshold, it is determined that the second preset condition is not satisfied. For another example, if the network device detects that a transmission rate of the terminal device is lower than a threshold, or that a transmission quality parameter, a reliability parameter and other parameters between the network device and the terminal device are lower than a threshold, it can be determined that the second preset condition is not satisfied, and then the network device transmits the first indication information to the terminal device.

For example, the terminal device receives the first indication information transmitted by the network device by signaling.

In some optional embodiments, the training and updating the parameters of the neural network includes the following operations. The terminal device iteratively trains the neural network based on pre-obtained sample CSI data, and obtains error information of a method for CSI feedback related to the neural network. The terminal device adjusts the parameters of the neural network based on the error information until the error information is less than a third preset threshold.

In this embodiment, the terminal device iteratively trains the neural network based on the sample CSI data, the parameters of the neural network of the terminal side and the parameters of the neural network of the network side in the following manner. The sample CSI data is input into the neural network of the terminal side to obtain compressed CSI data, and then the compressed CSI data is input into the neural network of the network side to obtain the restored CSI data. An error is calculated using the initially inputted sample CSI data and the restored CSI data, and the parameters of the neural network on the terminal side and the network side are adjusted according to the error, and the above processes are repeated until the obtained error is less than a third preset threshold.

In some optional embodiments of the present disclosure, the method further includes: transmitting, by the terminal device, fourth information to the network device. The fourth information includes: an updated number of the bits required for CSI feedback and the updated parameters of the neural network of the method for CSI feedback related to the neural network.

In this embodiment, after the training of the neural network is completed, that is, when the error information is less than the third preset threshold, the terminal device transmits the updated number of bits required for CSI feedback and the updated parameters of the neural network of the method for CSI feedback related to the neural network to the network device. In particular, the terminal device transmits the updated parameters of the neural network of the network side to the network device, so that the network device can update the parameters of the neural network. In this way, the terminal device and the network device can continue performing CSI feedback using the method for CSI feedback associated with the neural network.

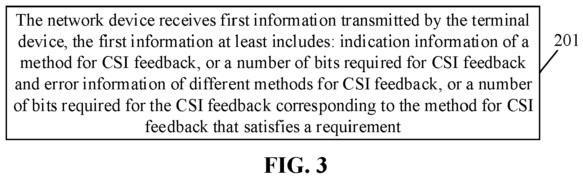

Based on the above embodiments, the embodiments of the disclosure further provide a method for channel state information feedback. FIG. 3 is a third flow diagram of the method for channel state information feedback according to an embodiment of the disclosure. As shown in FIG. 3, the method includes an operation 201.

At 201, the network device receives first information transmitted by the terminal device. The first information at least includes indication information of the method for CSI feedback, or the number of bits required for CSI feedback and error information of the different methods for CSI feedback, or the number of bits required for the CSI feedback corresponding to the method for CSI feedback that satisfies a requirement.

In this embodiment, the method for CSI feedback further includes at least one of a codebook-based method for CSI feedback, a neural-network-based method for full channel CSI compression feedback, or a neural-network-based method for full-channel CSI eigenvector compression feedback.

In this embodiment, the CSI feedback can be triggered in at least the following three ways. In a first way, the terminal device determines the method for CSI feedback and indicates the method for CSI feedback to the network device. In a second way, the terminal device transmits error information and the number of bits required for CSI feedback of each method for CSI feedback to the network device, and the network device selects a method for CSI feedback. In a third way, the terminal device first determines the method for CSI feedback that satisfies the requirement, and then transmits the number of bits required for CSI feedback corresponding to the method for CSI feedback that satisfies the requirement to the network device, that is, the terminal device first determines a part of the methods for CSI feedback that satisfies the requirement, and then the network device selects the method for CSI feedback.

Regarding the specific contents of the above-mentioned three ways, reference can be made to the above-mentioned embodiments, and the specific contents are not be repeated here.

With the technical solution of the embodiment of the present disclosure, the method for CSI feedback is indicated to the network device by the terminal device, to determine which type of CSI feedback is triggered by the terminal device. Alternatively, the error information and the number of bits required for CSI feedback of different methods for CSI feedback, or the number of bits required for CSI feedback corresponding to the method for CSI feedback that satisfies the requirement is transmitted to the network device by the terminal device, so that the network device selects the method for CSI feedback and the network device determines to use which CSI feedback. Therefore, a method for CSI feedback is triggered for CSI feedback under the condition of multiple methods for CSI feedback. In addition, the network device selects a method for CSI feedback according to the error information and the number of bits required for CSI feedback of different methods for CSI feedback, or the number of bits required for CSI feedback corresponding to the method for CSI feedback that satisfies the requirement. This selection made based on the error information and the feedback overhead is beneficial for the network device to perform uplink channel resource scheduling.

In some optional embodiments of the disclosure, the method for CSI feedback that satisfies the requirement includes a method for CSI feedback, error information of which is less than a first preset threshold.

In some optional embodiments of the present disclosure, in case that the first information at least includes the number of bits required for CSI feedback and error information of the different methods for CSI feedback, or the number of bits required for the CSI feedback corresponding to the method for CSI feedback that satisfies a requirement, the method further includes: determining, by the network device, a method for CSI feedback based on the first information, and transmitting, by the network device, second information to the terminal device. The second information includes indication information of the method for CSI feedback. For example, the network device may transmit second information to the terminal device by signaling.

In this embodiment, in case that the first information at least includes the number of bits required for CSI feedback and error information of the different methods for CSI feedback, the network device may select a method for CSI feedback according to the error information and/or the number of bits required for CSI feedback of each method for CSI feedback. For example, the network device may compare error information of different methods for CSI feedback, select a method for CSI feedback having the minimum error as the method for CSI feedback (e.g., when uplink channel resources are sufficient), or may select at least one method for CSI feedback having an error smaller than a preset threshold, and select a method for CSI feedback in which the minimum number of bits is required for CSI feedback among the at least one method for CSI feedback as the method for CSI feedback (e.g., when uplink channel resources are insufficient).

In case that the first information at least includes a number of required bits for CSI feedback corresponding to the method for CSI feedback that satisfies the requirement, the network device may select a method for CSI feedback according to the number of bits required for CSI feedback, for example, a method for CSI method in which a minimum number of bits is required for CSI feedback as the method for CSI feedback.

In some optional embodiments, in case where the indication information of the method for CSI feedback indicates a neural-network-based-method for full channel CSI compression feedback, or a neural-network-based-method for full-channel CSI eigenvector compression feedback, the method further includes: receiving, by the network device, third information transmitted by the terminal device. The third information includes parameters of a neural network corresponding to the method for CSI feedback determined by the network device.

In this embodiment, when the method for CSI feedback determined by the network device is a neural-network-based-method for full channel CSI compression feedback, or a neural-network-based-method for full-channel CSI eigenvector compression feedback, the terminal device also transmits the determined parameters of the neural network corresponding to the method for CSI feedback to the network device, and the network device can set parameters of the neural network at the network side according to the parameters of the neural network.

In some optional embodiments, the method further includes operations as follows. The network device transmits configuration information to the terminal device. The configuration information is used by the terminal device for CSI feedback. The network device receives CSI transmitted by the terminal device.

In some optional embodiments of the disclosure, the method further includes: transmitting, by the network device, first indication information to the terminal device when the second preset condition is satisfied. The first indication information is used to inform the terminal device to return back to the codebook-based method for CSI feedback.

In this embodiment, the network device transmits first indication information to the terminal device when the second preset condition is satisfied, and the first indication information is used to inform the terminal device to return back to the codebook-based method for CSI feedback, that is, the first indication information is used to trigger the terminal device to update the parameters of the neural network. For example, the network device may determine whether the second preset condition is satisfied based on HARQ feedback information and/or detected state information of a channel between the network device and the terminal device. For example, if the number of negative responses (NACK) received by the network device reaches a threshold, the network device determines that the second preset condition is not satisfied. For another example, if the network device detects that a transmission rate of the terminal device is lower than a threshold, or that a transmission quality parameter, a reliability parameter and other parameters between the network device and the terminal device are lower than a threshold, the network device determines that the second preset condition is not satisfied, and then the network device transmits the first indication information to the terminal device.

In some optional embodiments of the disclosure, the method further includes: receiving, by the network device, second indication information transmitted by the terminal device. The second indication information is used to inform the network device to return back to the codebook-based method for CSI feedback.

In this embodiment, when the terminal device triggers to update the parameters of the neural network, the terminal device transmits second indication information to the network device to inform the network device to return back to the codebook-based method for CSI feedback. In this way, the terminal device and the network device can adopt the codebook-based method for CSI feedback during a training process of the neural network. For example, the terminal device may transmit the second indication information to the network device by signaling.

In some optional embodiments of the disclosure, the method further includes: receiving, by the network device, fourth information transmitted by the terminal device. The fourth information includes: an updated number of the bits required for CSI feedback and the updated parameters of the neural network of the method for CSI feedback related to the neural network.

In this embodiment, after the training of the neural network is completed, that is, when the error information corresponding to the neural network is less than the third preset threshold after the neural network is transmitted by the terminal device, the terminal device transmits the updated number of bits required for CSI feedback and the updated parameters of the neural network of the method for CSI feedback related to the neural network to the network device. In particular, the terminal device transmits the updated parameters of the neural network of the network side to the network device, so that the network device can update the parameters of the neural network. In this way, the terminal device and the network device can continue performing CSI feedback using the method for CSI feedback associated with the neural network.

The method for channel state information feedback of the embodiment of the present disclosure will be described in detail below in connection with specific examples.

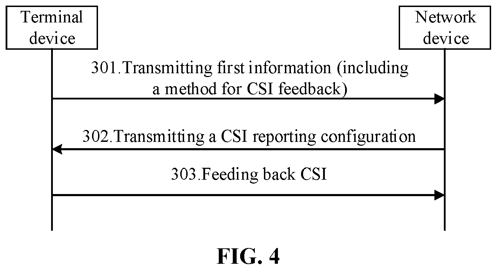

In a first example, FIG. 4 is a first interactive flow diagram of the method for channel state information feedback according to an embodiment of the present disclosure. As shown in FIG. 4, the method includes operations 301 to 303.

At 301, the terminal device transmits the first information to the network device. The first information includes a method for CSI feedback.

At 302, the network device transmits a CSI reporting configuration to the terminal device.

At 303, the terminal device feeds back CSI to the network device.

In the case where the method for CSI feedback is a neural-network-based-method for full channel CSI compression feedback, or a neural-network-based-method for full-channel CSI eigenvector compression feedback, the first information further includes a number of bits required for CSI feedback and parameters of a neural network.

In this example, it is assumed that the codebook-based method for CSI feedback, the neural-network-based-method for full channel CSI compression feedback, or the neural-network-based-method for full-channel CSI eigenvector compression feedback have errors of 0.1, 0.06, and 0.04, respectively, and the number of bits required by the above methods for CSI feedback are 150, 250, and 180 bits, respectively. When a selection criterion of the terminal device is a minimum error, the terminal device selects the neural-network-based-method for full-channel CSI eigenvector compression feedback. When the selection criterion of the terminal device is that the error is less than a threshold and the number of bits in feedback is minimum, assuming the threshold is 0.05, the terminal device selects the neural-network-based-method for full-channel CSI eigenvector compression feedback.

The terminal device transmits the selected method for CSI feedback to a network device (e.g. a base station) via a medium access control-control element (MAC-CE). When the selected method for CSI feedback is a neural-network-based-method for full channel CSI compression feedback, or a neural-network-based-method for full-channel CSI eigenvector compression feedback, the terminal device also transmits the number of bits required for feedback and the parameters of the neural network to the network device through the MAC-CE. The network device determines a CSI reporting configuration according to the number of bits required for feedback, and transmits the CSI reporting configuration to the terminal device through radio resource control (RRC) signaling, and the terminal device performs CSI feedback according to the CSI reporting configuration.

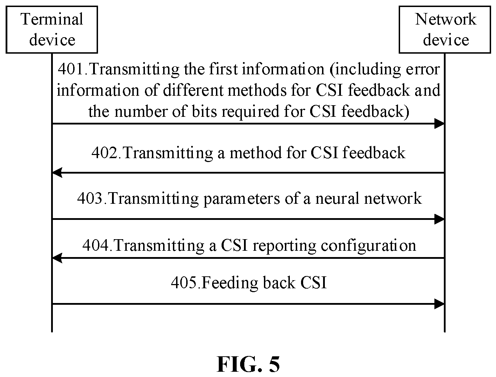

In a second example, FIG. 5 is the second interactive flow diagram of the method for channel state information feedback according to an embodiment of the present disclosure. As shown in FIG. 5, the method includes operations 401 to 405.

At 401, the terminal device transmits first information to the network device. The first information includes error information and the number of bits required for CSI feedback of different methods for CSI feedback.

At 402, the network device transmits a method for CSI feedback to the terminal device.

At 403, the terminal device transmits parameters of a neural network to the network device.

At 404, the network device transmits a CSI reporting configuration to the terminal device.

At 405, the terminal device feeds back CSI to the network device.

In this example, operation 403 is performed only when the method for CSI feedback is a neural-network-based-method for full channel CSI compression feedback, or a neural-network-based-method for full-channel CSI eigenvector compression feedback.

In this example, it is assumed that the codebook-based method for CSI feedback, the neural-network-based-method for full channel CSI compression feedback, or the neural-network-based-method for full-channel CSI eigenvector compression feedback have errors of 0.1, 0.02, and 0.04, respectively, and the number of bits required by the above methods for CSI feedback is 150, 250, and 180 bits, respectively. The terminal device transmits the error information and the number of bits required for feedback of the three methods for CSI feedback to the network device (such as the base station). When the uplink channel resources are sufficient and the selection criterion of network device can be a minimum error, the network device selects the neural-network-based-method for full channel CSI compression feedback. When the uplink channel resources are insufficient, the selection criteria of network device can be that the error is less than a threshold and the number of bits in feedback is minimum. Assuming that the threshold is 0.05, the network device selects the neural-network-based-method for full-channel CSI eigenvector compression feedback, and informs the terminal device through signaling. The terminal device transmits the parameters of the neural network to the network device through the MAC-CE. The network device determines a CSI reporting configuration according to the number of bits required for feedback, and transmits the CSI reporting configuration to the terminal device through RRC signaling, and the terminal device performs CSI feedback according to the CSI reporting configuration.

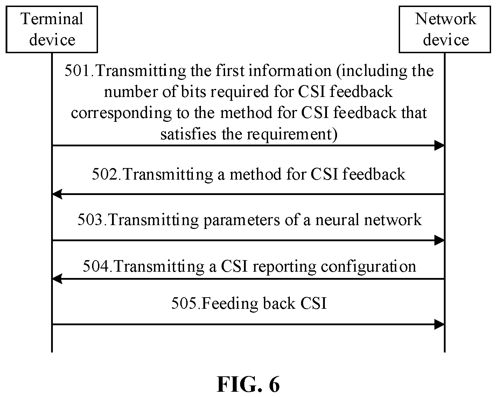

In a third example, FIG. 6 is a third interactive flow diagram of the method for channel state information feedback according to an embodiment of the present disclosure. As shown in FIG. 6, the method includes operations 501 to 505.

At 501, the terminal device transmits first information to the network device. The first information includes the number of bits required for the CSI feedback corresponding to the method for CSI feedback that satisfies the requirement.

At 502, the network device transmits a method for CSI feedback to the terminal device.

At 503, the terminal device transmits parameters of a neural network to the network device.

At 504, the network device transmits a CSI reporting configuration to the terminal device.

At 505, the terminal device feeds back CSI to the network device.

In this example, operation 503 is performed only when the method for CSI feedback is a neural-network-based-method for full channel CSI compression feedback, or a neural-network-based-method for full-channel CSI eigenvector compression feedback.

In this example, it is assumed that the codebook-based method for CSI feedback, the neural-network-based-method for full channel CSI compression feedback, or the neural-network-based-method for full-channel CSI eigenvector compression feedback have errors of 0.1, 0.02, and 0.04, respectively, and the number of bits required by the above methods for CSI feedback are 150, 250, and 180 bits, respectively. Assuming that the threshold is 0.05, the terminal device determines that the method for feedback having the error less than the threshold is the neural-network-based-method for full channel CSI compression feedback, and the neural-network-based-method for full-channel CSI eigenvector compression feedback. The number of bits required by the two above methods for feedback is sent to the network device (such as a base station). The network device selects the neural-network-based-method for full-channel CSI eigenvector compression feedback in which the minimum number of bits is required for the feedback, and informs the terminal device through signaling. The terminal device transmits the parameters of the neural network to the network device through an MAC-CE. The network device determines a CSI reporting configuration according to the number of bits required for feedback, and transmits the CSI reporting configuration to the terminal device through RRC signaling, and the terminal device performs CSI feedback according to the CSI reporting configuration.

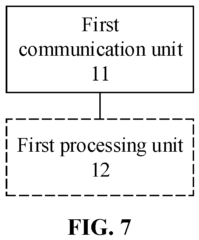

The embodiment of the present disclosure further provides a device for channel state information feedback, which is applied to a terminal device. FIG. 7 is a first schematic diagram of a composition structure of the device for channel state information feedback according to an embodiment of the present disclosure. As shown in FIG. 7, the device includes a first communication unit 11 configured to transmit first information to a network device. The first information at least includes indication information of the method for CSI feedback, or the number of bits required for CSI feedback and error information of the different methods for CSI feedback, or the number of bits required for the CSI feedback corresponding to the method for CSI feedback that satisfies a requirement

In some optional embodiments of the disclosure, the method for CSI feedback includes at least one of a codebook-based method for CSI feedback, a neural-network-based method for full channel CSI compression feedback, or a neural-network-based method for full-channel CSI eigenvector compression feedback.

In some optional embodiments of the disclosure, in case where the indication information of the method for CSI feedback indicates the neural-network-based method for full channel CSI compression feedback, or the neural-network-based method for full-channel CSI eigenvector compression feedback, the first information further includes a number of bits required for CSI feedback and parameters of a neural network.

In some optional embodiments of the disclosure, the method for CSI feedback that satisfies the requirement includes: a method for CSI feedback, error information of which is less than a first preset threshold.

In some optional embodiments of the disclosure, the first communication unit 11 is further configured to receive second information transmitted by the network device, the second information including indication information of the method for CSI feedback, in case that the first information at least includes the number of bits required for CSI feedback and error information of the different methods for CSI feedback, or the number of bits required for CSI feedback corresponding to the method for CSI feedback that satisfies the requirement.

In some optional embodiments of the disclosure, the first communication unit 11 is further configured to transmit third information including parameters of a neural network corresponding to the method for CSI feedback to the network device, in case that the indication information of the method for CSI feedback indicates the neural-network-based-method for full channel CSI compression feedback, or a neural-network-based-method for full-channel CSI eigenvector compression feedback.

In some optional embodiments of the disclosure, the device further includes a first processing unit 12 configured to train and update parameters of a neural network when a first preset condition is satisfied.

In some optional embodiments of the disclosure, the first preset condition is satisfied in case that error information of the method for CSI feedback related to the neural network exceeds a second preset threshold; or in case that the communication unit 11 receives the first indication information of the network device, where the first indication information is used to inform the terminal device to return back to the codebook-based method for CSI feedback.

In some optional embodiments of the disclosure, the first communication unit 11 is further configured to transmit fourth information to the network device. The fourth information includes: the updated parameters of the neural network and an updated number of the bits required for CSI feedback of the method for CSI feedback related to the neural network.

In some optional embodiments of the disclosure, the first communication unit 11 is further configured to transmit second indication information to the network device, the second indication information being used to inform the network device to return back to the codebook-based method for CSI feedback, in case that the first preset condition is satisfied when error information of the method for CSI feedback related to the neural network exceeds the second preset threshold.

In the embodiment of the disclosure, the first processing unit 12 in the device can be implemented by a central processing unit (CPU), a digital signal processor (DSP), a microcontroller unit (MCU), or a field-programmable gate array (FPGA) in practical applications. The first communication unit 11 in the device can be implemented by a communication module (including a basic communication suite, an operating system, a communication module, a standardized interface, a protocol, etc.) and a transceiver antenna in practical application.

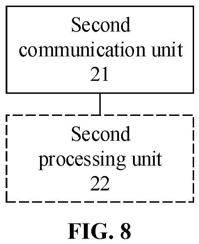

The embodiment of the disclosure further provides a device for channel state information feedback, which is applied into a network device. FIG. 8 is a second schematic diagram of a composition structure of the method for channel state information feedback according to an embodiment of the disclosure. As shown in FIG. 8, the device includes a second communication unit 21 configured to receive first information transmitted by the terminal device. The first information at least includes: indication information of the method for CSI feedback, or the number of bits required for CSI feedback and error information of the different methods for CSI feedback, or the number of bits required for the CSI feedback corresponding to the method for CSI feedback that satisfies a requirement.

In some optional embodiments of the disclosure, the method for CSI feedback includes at least one of a codebook-based method for CSI feedback, a neural-network-based method for full channel CSI compression feedback, or a neural-network-based method for full-channel CSI eigenvector compression feedback.

In some optional embodiments of the disclosure, the method for CSI feedback that satisfies the requirement includes: a method for CSI feedback, error information of which is less than a first preset threshold.

In some optional embodiments of the disclosure, the device further includes a second processing unit 22 configured to determine a method for CSI feedback based on the first information in case that the first information at least includes the number of bits required for CSI feedback and error information of the different methods for CSI feedback, or the number of bits required for CSI feedback corresponding to the method for CSI feedback that satisfies the requirement;

The second communication unit 21 is further configured to transmit second information to the terminal device. The second information includes indication information of the method for CSI feedback.

In some optional embodiments of the disclosure, the second communication unit 21 is further configured to receive third information transmitted by the terminal device, the third information including parameters of a neural network corresponding to the method for CSI feedback, in case that the indication information of the method for CSI feedback indicates the neural-network-based-method for full channel CSI compression feedback, or a neural-network-based-method for full-channel CSI eigenvector compression feedback.

In some optional embodiments of the disclosure, the second communication unit 21 is further configured to transmit first indication information to the terminal device when the second preset condition is not satisfied. The first indication information is used to inform the terminal device to return back to the codebook-based method for CSI feedback.

In some optional embodiments of the disclosure, the second communication unit 21 is further configured to receive second indication information transmitted by the terminal device. The second indication information is used to inform the network device to return back to the codebook-based method for CSI feedback.

In some optional embodiments of the disclosure, the second communication unit 21 is further configured to receive fourth information transmitted by the terminal device. The fourth information includes: updated parameters of a neural network and an updated number of bits required for CSI feedback of the method for CSI feedback related to the neural network.

In the embodiment of the disclosure, the second processing unit 22 in the device can be implemented by a CPU, a DSP, an MCU or an FPGA in practical applications. The second communication unit 21 in the device can be implemented by a communication module (including a basic communication suite, an operating system, a communication module, a standardized interface, a protocol, etc.) and a transceiver antenna in practical applications.

It should be noted that when the device for channel state information feedback provided by the above-mentioned embodiments are divided into for example the above program modules when performing channel state information feedback. In practical application, the above-mentioned processing may be distributed into different program modules according to needs, that is, an internal structure of the device can be divided into different program modules to complete all or part of the processing described above. In addition, the device for channel state information feedback and the method for channel state information feedback provided by the above-mentioned embodiments belong to the same conception, and regarding the specific implementation process of the device, reference may be made to the method embodiment, which is not be described here in detail.

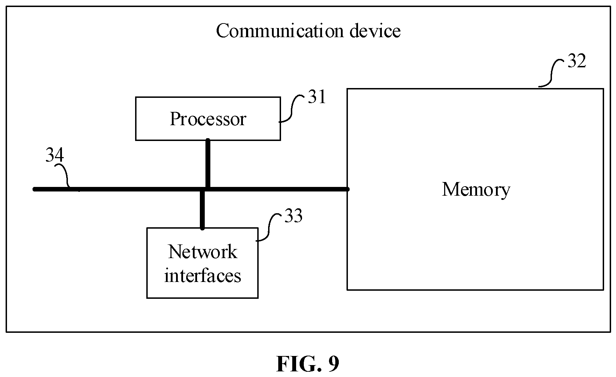

The embodiments of the present disclosure further provide a communication device which may be a terminal device or a network device in the aforementioned embodiment. FIG. 9 is a schematic diagram of a hardware composition structure of the communication device according to an embodiment of the present disclosure. As shown in FIG. 9, the communication device includes a memory 32, a processor 31, and a computer program stored on the memory 32 and run on the processor 31. When the processor 31 executes the program, the processor implements the operations of the method for channel state information feedback applied to the terminal device in the embodiment of the present disclosure. Alternatively, when the processor 31 executes the program, the processor implements the operations of the method for channel state information feedback applied to the network devices in the embodiments of the present disclosure.

Alternatively, the communication device further comprises one or more network interfaces 33. The various components in the communication device are coupled together via a bus system 34. Understandably, the bus system 34 is used to enable connection communication between these components. The bus system 34 includes a power bus, a control bus and a status signal bus in addition to a data bus. However, for the sake of clarity, the various buses are labeled as bus system 34 in FIG. 9.

It can be appreciated that the memory 32 may be a volatile memory or a non-volatile memory, and may include both the volatile memory and the non-volatile memory. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a ferromagnetic surface memory, a compact disc, or a compact disc read-only memory (CD-ROM). The ferromagnetic surface memory may be a disk memory or a tape memory. The volatile memory may be a random access memory (RAM), which serves as an external cache. By way of exemplary but not limiting, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), synclink dynamic random access memory (SLDRAM), direct rambus random access memory (DRRAM). Memories 32 described in embodiments of the present disclosure are intended to include but are not limited to these and any other suitable types of memories.

The methods disclosed above in embodiments of the present disclosure may be applied to or implemented by the processor 31. The processor 31 may be an integrated circuit chip having signal processing capability. In implementation, the operations of the method described above may be completed by integrated logic circuits of the hardware in the processor 31 or by instructions in the form of software. The processor 31 may be a general purpose processor, a DSP, or other programmable logic devices, a discrete gate or a transistor logic device, a discrete hardware component or the like. The processor 31 may implement or execute the disclosed methods, operations and logical block diagrams in embodiments of the present disclosure. The general purpose processor may be a microprocessor or any conventional processor or the like. The operations of the method disclosed in conjunction with the embodiments of the present disclosure can be directly executed and implemented by a hardware decoding processor, or by combining hardware and software modules in the decoding processor. The software module may be located in a storage medium in a memory 32, and the processor 31 reads information in the memory 32 and implement the operations of the foregoing method in conjunction with its hardware.

In exemplary embodiments, the communication device may be implemented by one or more application specific integrated circuits (ASICs), DSPs, programmable logic devices (PLDs), complex programmable logic devices (CPLDs), FPGAs, general purpose processors, controllers, MCUs, microprocessors, or other electronic components for performing the foregoing methods.

In exemplary embodiments, the embodiments of the present disclosure further provide a computer-readable storage medium, such as the memory 32 including a computer program that may be executed by the processor 31 of the communication device to implement the operations described in the foregoing method. The computer-readable storage medium may be a memory such as FRAM, ROM, PROM, EPROM, EEPROM, a Flash Memory, a ferromagnetic surface memory, a compact disc, or a CD-ROM, and may also be a variety of devices including one or any combination of the above-mentioned memories.

A computer-readable storage medium provided by an embodiment of the present disclosure has a computer program stored thereon. When the program is executed by a processor, the processor implements the operations of the method for the channel state information feedback applied to a terminal device in the embodiment of the present disclosure. Alternatively, when the program is executed by a processor, the processor implements the operations of the method for condition configuration applied to a network device by an embodiment of the present disclosure.

The methods disclosed in several method embodiments provided in the present disclosure can be arbitrarily combined without conflict to obtain a new method embodiment.

The features disclosed in several product embodiments provided in the present disclosure can be arbitrarily combined without conflict to obtain a new product embodiment.

The features disclosed in several method or device embodiments provided in the present disclosure can be arbitrarily combined without conflict to obtain a new method embodiment or device embodiment.

In several embodiments provided in the present disclosure, it should be appreciated that the disclosed devices and methods may be implemented in other ways. The device embodiments described above are only schematic, for example, the division of the units is only a logical functional division, and may be actually implemented in other ways. For example, a plurality of units or components may be combined, or may be integrated into another system, or some features may be ignored, or not performed. In addition, coupling, or direct coupling, or a communication connection between the shown or discussed components may be via some interface, indirect coupling or communication connection of the device or unit, may be electrical, mechanical, or otherwise.

The units described above as separate parts may or may not be physically separated, and the components displayed as units may or may not be physical units. That is, the units may be located in the same place or may be distributed over a plurality of network elements. Some or all of these units may be selected according to actual needs to achieve the purpose of the present embodiment.

In addition, various functional units in each embodiment of the present disclosure may be all integrated into one processing unit, or various units may be each separated as one unit, or two or more units may be integrated into one unit. The integrated unit can be realized in the form of hardware or in the form of hardware and software function unit.

A person of ordinary skill in the field may understand that all or part of the operations of implementing the above-mentioned method embodiment can be completed by instructing related hardware by a program, the above-mentioned program may be stored in a computer-readable storage medium. When the program is executed, the operations including the above-mentioned method embodiment are executed. The storage medium includes a mobile storage device, a ROM, a RAM, a magnetic disk or an optical disk, and other media capable of storing program codes.

Alternatively, the integrated units of the disclosure may be stored in a computer-readable storage medium if the integrated units are implemented in the form of software functional modules and sold or used as a stand-alone product. Based on this understanding, an essential part of the technical solution of the embodiments of the present disclosure or parts of the technical solution that contribute to the prior art may be embodied in the form of a software product, and the computer software product is stored in a storage medium and includes a number of instructions for causing a computer device (which may be a personal computer, a server, a network device, etc.) to perform all or part of the methods described in the embodiments of the present disclosure. The storage medium includes a mobile storage device, a ROM, a RAM, a magnetic disk or an optical disk, and other media capable of storing program codes.

Only implementations of the present disclosure are described above, but the protection scope of the present disclosure is not limited thereto. Changes or substitutions easily conceived by any skilled person in the technical field fall within the protection scope of the present disclosure. Therefore, the protection scope of the present disclosure shall be subject to the protection scope of the said claims.

## Claims

1. A method for channel state information (CSI) feedback, comprising:
transmitting, by a terminal device, first information to a network device, the first information at least comprising:
indication information of a method for CSI feedback, or
a number of bits required for CSI feedback and error information of different methods for CSI feedback, or
a number of bits required for CSI feedback corresponding to a method for CSI feedback that satisfies a requirement.

2. The method of claim 1, wherein the method for CSI feedback comprises at least one of: a codebook-based method for CSI feedback, a neural-network-based-method for full channel CSI compression feedback, or a neural-network-based-method for full-channel CSI eigenvector compression feedback.

3. The method of claim 2, wherein in case that the indication information of the method for CSI feedback indicates the neural-network-based method for full channel CSI compression feedback, or the neural-network-based method for full-channel CSI eigenvector compression feedback, the first information further comprises the number of bits required for the CSI feedback and parameters of a neural network.

4. The method of claim 1, wherein the method for CSI feedback that satisfies the requirement comprises a method for CSI feedback, error information of which is less than a first preset threshold.

5. The method of claim 2, wherein in case that the first information at least comprises the number of bits required for CSI feedback and error information of the different methods for CSI feedback, or the number of bits required for CSI feedback corresponding to the method for CSI feedback that satisfies the requirement, the method further comprises:
receiving, by the terminal device, second information transmitted by the network device, the second information comprising indication information of the method for CSI feedback.

6. The method of claim 5, wherein in case that the indication information of the method for CSI feedback indicates the neural-network-based-method for full channel CSI compression feedback, or the neural-network-based-method for full-channel CSI eigenvector compression feedback, the method further comprises:
transmitting, by the terminal device, third information to the network device, the third information comprising parameters of a neural network corresponding to the method for CSI feedback.

7. The method of any one of claims 1 to 6, further comprising:
training and updating, by the terminal device, parameters of a neural network when a first preset condition is satisfied.

8. The method of claim 7, wherein the first preset condition is satisfied in one of following conditions:
when error information of the method for CSI feedback related to the neural network exceeds a second preset threshold; or,
when first indication information of the network device is received by the terminal device, the first indication information informing the terminal device to return back to a codebook-based method for CSI feedback.

9. The method of claim 7, further comprising:
transmitting, by the terminal device, fourth information to the network device, the fourth information comprising the updated parameters of the neural network and an updated number of the bits required for CSI feedback of the method for CSI feedback related to the neural network.

10. The method of claim 8, wherein in case that the first preset condition is satisfied when error information of the method for CSI feedback related to the neural network exceeds the second preset threshold, the method further comprises:
transmitting, by the terminal device, second indication information to the network device, the second indication information informing the network device to return back to the codebook-based method for CSI feedback.

11. A method for channel state information (CSI) feedback, comprising:
receiving, by a network device, first information transmitted by a terminal device, the first information at least comprising:
indication information of a method for CSI feedback, or
a number of bits required for CSI feedback and error information of different methods for CSI feedback, or
a number of bits required for CSI feedback corresponding to a method for CSI feedback that satisfies a requirement.

12. The method of claim 11, wherein the method for CSI feedback comprises at least one of: a codebook-based method for CSI feedback, a neural-network-based-method for full channel CSI compression feedback, or a neural-network-based-method for full-channel CSI eigenvector compression feedback.

13. The method of claim 11, wherein the method for CSI feedback that satisfies the requirement comprises a method for CSI feedback, error information of which is less than a first preset threshold.

14. The method of claim 12, wherein in case that the first information at least comprises the number of bits required for CSI feedback and error information of the different methods for CSI feedback, or the number of bits required for CSI feedback corresponding to the method for CSI feedback that satisfies the requirement, the method further comprises:
transmitting, by the network device, second information to the terminal device, the second information comprising indication information of the method for CSI feedback.

15. The method of claim 14, wherein in case that the indication information of the method for CSI feedback indicates the neural-network-based-method for full channel CSI compression feedback or the neural-network-based-method for full-channel CSI eigenvector compression feedback, the method further comprises:
receiving, by the network device, third information transmitted by the terminal device, the third information comprising parameters of a neural network corresponding to the method for CSI feedback.

16. The method of claim 11, further comprising:
transmitting first indication information to the terminal device when a second preset condition is not satisfied, the first indication information informing the terminal device to return back to a codebook-based method for CSI feedback.

17. The method of claim 11, further comprising:
receiving, by the network device, second indication information transmitted by the terminal device, the second indication information informing the network device to return back to a codebook-based method for CSI feedback.

18. The method of any one of claims 11 to 17, further comprising:
receiving, by the network device, fourth information transmitted by the terminal device, the fourth information comprising updated parameters of a neural network and an updated number of the bits required for CSI feedback of the method for CSI feedback related to the neural network.

19. A device for channel state information (CSI) feedback, comprising a first communication unit configured to transmit first information to a network device, the first information at least comprising:
indication information of a method for CSI feedback, or
a number of bits required for CSI feedback and error information of different methods for CSI feedback, or
a number of bits required for CSI feedback corresponding to a method for CSI feedback that satisfies a requirement.

20. A device for channel state information (CSI) feedback, comprising a second communication unit configured to receive first information transmitted by a terminal device, the first information at least comprising:
indication information of a method for CSI feedback, or
a number of bits required for CSI feedback and error information of different methods for CSI feedback, or
a number of bits required for CSI feedback corresponding to a method for CSI feedback that satisfies a requirement.

21. A computer-readable storage medium on which a computer program is stored, wherein the computer program is executed by a processor to implement the steps of the method of any one of claims 1 to 10; or the computer program is executed by the processor to implement the steps of the method of any one of claims 11 to 18.

22. A communication device comprising a memory, a processor and a computer program stored on the memory and run on the processor, wherein the program, when executed by the processor, implements the steps of the method of any one of claims 1 to 10; or the program, when executed by the processor, implements the steps of the method of any one of claims 11 to 18.
